# EUROPÄISCHE PATENTSCHRIFT

(11) **EP 3 728 331 B1**
(45) Veröffentlichungstag und Bekanntmachung des Hinweises auf die Patenterteilung: **16.08.2023**
(21) Anmeldenummer: 18826656.3
(22) Anmeldetag: 20.12.2018
(51) Int. Cl.: C08B 11/08

(54) **OXIDATIVER ABBAU VON CELLULOSEETHERN**
BREAKDOWN OF CELLULOSETHERS BY OXIDATION
DÉGRADATION OXYDATIVE DE L'ETHER CELLULOSE

(30) Priorität: 22.12.2017 DE 102017223690
(43) Veröffentlichungstag der Anmeldung: 28.10.2020
(73) Patentinhaber: SE Tylose GmbH & Co.KG, 65203 Wiesbaden (DE)
(72) Erfinder: KLEINERT, Mike, 55131 Mainz (DE)
(74) Vertreter: Weickmann, Hans
(86) Internationale Anmeldenummer: PCT/EP2018/086156
(87) Internationale Veröffentlichungsnummer: WO 2019/122104

(56) Entgegenhaltungen:
- WO-A1-00/32636
- DE-A1- 19 854 770
- US-B1- 6 939 961
- ASHISH SARODE ET AL: "Low-Viscosity Hydroxypropylcellulose (HPC) Grades SL and SSL: Versatile Pharmaceutical Polymers for Dissolution Enhancement, Controlled Release, and Pharmaceutical Processing", AAPS PHARMSCITECH, Bd. 14, Nr. 1, 19. Dezember 2012 (2012-12-19), Seiten 151-159, XP055569821, DOI: 10.1208/s12249-012-9897-x

## Beschreibung

Die Erfindung betrifft ein Verfahren zur Herstellung eines niedrigviskosen Celluloseether-Produkts, das mit dem Verfahren erhältliche niedrigviskose Celluloseether-Produkt sowie dessen Verwendung.

Celluloseether hat typischerweise eine hohe Viskosität, da zu dessen Herstellung hochpolymere Cellulose als Startmaterial verwendet ist. Durch Depolymerisierung kann die Viskosität des Celluloseether-Edukts reduziert werden. Die zum Abbau von Celluloseethern eingesetzten Verfahren umfassen neben der sauer katalysierten hydrolytischen Spaltung der acetalischen Bindung unter anderem auch den oxidativen und den sauer-oxidativen Abbau, den Abbau durch energiereiche Strahlung oder Mikroorganismen/Enzyme sowie den Abbau durch Ultraschall (Thielking et al., Cellulose Ethers, Ullmanns's Encyclopedia of Industrial Chemistry, 2006). Industriell werden hauptsächlich saure und oxidative Prozesse in der Celluloseether-Produktion genutzt. Man unterscheidet grundsätzlich in Trocken- und Feuchtverfahren.

Es ist bekannt, dass nicht primär der Abbaugrad (*η*₀/*η*ₙₑᵤ) technisch herausfordernd ist, sondern die final erreichbare Viskosität, z.B. in wässriger Lösung. Ein Abbau der Viskosität von *η*_{Edukt} = 60.000 mPa s zu *η*_{Produkt} = 30 mPa s ist deutlich leichter zu bewerkstelligen, als der Abbau von *η*_{Edukt} = 300 mPa s zu *η*_{Produkt} = 6 mPa s, obwohl der Abbaugrad im ersten Fall 60.000/30 = 2.000 und im zweiten Fall nur 300/6 = 50 beträgt.

Es ist bekannt, dass durch Depolymerisierung viskositätsreduzierte Celluloseether häufig Abbauprodukte enthalten, die in wässriger Lösung unvorteilhaft zu Verfärbungen führen können. Eine entsprechende Gelbfärbung kann z.B. durch standardisierte Verfahren, wie ASTM E313, ASTM D5386-16 und ASTM D1925 quantifiziert werden.

Typischerweise muss nach der Depolymerisierung entweder ein Bleichschritt oder ein nachgeschalteter Auswaschschritt folgen, bei dem Verunreinigungen entfernt werden, um die Gelbfärbung zu minimieren. Generell problematisch bei den üblichen, wässrigen Auswaschverfahren zur Reduzierung der Gelbfärbung nach dem Abbau ist allerdings die signifikant gestiegene Wasserlöslichkeit der abgebauten, viskositätsreduzierten Celluloseetherfragmente. Hohe Ausbeuteverluste bei der Aufreinigung sind die Folge. Die wässrige Auswaschung eignet sich vor allem für heißwasserflockbare Produkte, also insbesondere großtechnisch relevante, nichtionische Typen wie Hydroxypropylcellulose (HPC), Methylhydroxyethylcellulose (MHEC) und Methylhydroxypropylcellulose (MHPC).

Der oxidative Abbau von Celluloseethern führt in der Regel zu unselektiven Kettenspaltungen, wodurch sich eine hohe Zahl oxidierter Neben- und Spaltprodukte im Rohprodukt ergibt, die als Verunreinigungen die Reinheit des Produktes vermindern. Die Oxidation und die Bildung von Chromophoren sind für Cellulose bekannt und führen zudem makroskopisch zu einer Gelbverfärbung des trockenen Produktes sowie seiner wässrigen Lösungen. Die Mechanismen lassen sich analog von Cellulose auf Cellulosederivate wie Celluloseether übertragen (Lewin, Macromol. Symp. 1997, 118, 715-724).

Der saure Abbau von höherviskosen zu niederviskosen Celluloseethern findet bei erhöhter Temperatur (> 60 °C) statt und kann im Falle trockener Edukte mit gasförmigen Mineralsäuren wie beispielsweise HCl durchgeführt werden. Der Abbau trockener oder feuchter Edukte kann alternativ auch mit wässrigen Lösungen von Mineral- oder starken organischen Säuren bewerkstelligt werden. Dabei sind jedoch die Dosierung und insbesondere die gleichmäßige Verteilung schwer zu bewerkstelligen, da die meisten Celluloseether sowohl sehr gut wasserlöslich also auch oft hygroskopisch sind. Dies kann zu Verklumpungen führen, mit der Folge, dass heterogene Produkte erhalten werden, die teilweise signifikante Verfärbungen aufweisen. Zudem muss überschüssige Säure anschließend mit Base neutralisiert werden. Durch die Zugabe von Mineralsäuren und anschließende Neutralisierung mit Base erhöht sich unvorteilhaft der Salzgehalt des Produktes, was insbesondere bei Anwendungen im Pharmabereich nachteilig sein kann. Außerdem ist zumeist im Nachgang ein Bleichschritt nötig, um die gewünschte hohe Brillanz bzw. geringste Gelbverfärbung des abgebauten Produkts zu erreichen.

In EP 0 018 547 wird ein Verfahren zur Viskositätserniedrigung von wasserlöslichen, nichtionischen Celluloseethern (Methylhydroxyethyl-, Carboxymethyl- und Hydroxyethylcellulose) mit einem Trockengehalt von 20 bis 95 % durch Umsetzung mit einem Ozon/Sauerstoff- oder Ozon/LuftGemisch bei einer Temperatur von etwa 0-60 °C beschrieben. Die Gelbverfärbung der Produkte wird nicht als Problem erkannt.

In WO 2003/018637 wird ein Verfahren zur Depolymerisierung von getrockneten und gemahlenen Celluloseethern durch sauer-oxidativen Abbau mittels Mineralsäure und Oxidationsmittel beschrieben. Anschließend wird die Säure durch Zugabe einer Base neutralisiert. Angeblich ist durch das sauer-oxidative Trockenverfahren keine wässrige Auswaschung von potenziell entstandenen Spaltprodukten nötig, wodurch sich die bekannten hohen Auswaschverluste niedrigstviskoser Abbauprodukte in der üblichen Heißwasserauswaschung vermeiden lassen. Der Weißgrad der depolymerisierten Celluloseether liegt zwischen 71 und 83. Gerade die Herstellung von Endprodukten mit sehr geringer Viskosität (< 30 mPa s) bedürfen relativ harschen Reaktionsbedingungen, d.h. eine hohe Säurekonzentration und hohe Temperatur. Die Endprodukte haben entsprechend geringe Weißgrade. Darüber hinaus entsteht bei der Neutralisation eine hohe Salzfracht, die insbesondere bei pharmazeutischen Anwendungen unerwünscht ist.

WO 2009/061815 beschreibt ein vielstufiges sauer-oxidatives Trockenverfahren zur Herstellung sehr niederviskoser Celluloseether ohne Verfärbung. In dem Verfahren wird Celluloseether in trockenem Zustand bei erhöhter Temperatur mit einem ersten Oxidationsmittel und einer Säure depolymerisiert. Anschließend erfolgt eine Neutralisation. Aufgrund der erheblichen Verfärbungen, erfolgt die Zugabe eines zweiten Oxidationsmittels zur Entfärbung. Niederviskose MHPC-Typen mit Viskositäten im Bereich von 1,2-50 mPa s in 2%-iger wässriger Lösung bei 20 °C wurden erhalten.

WO 00/32636 offenbart ein Verfahren zum oxidativen Abbau wasserfeuchter Celluloseether, wie z.B. MHEC und MHPC, durch stufenweise Zugabe von Wasserstoffperoxid bei Temperaturen zwischen 65 und 125 °C. Das noch feuchte Rohprodukt wird neutralisiert und anschließend getrocknet. Angaben zur Verfärbung werden nicht gemacht.

DE 198 54 770 und US 6,939,961 offenbaren Verfahren zur Herstellung niedrigviskoser wasserlöslicher Celluloseether durch oxidativen Abbau höherviskoser Celluloseether mit Wasserstoffperoxid.

Aufgabe der vorliegenden Erfindung ist die Bereitstellung von niedrigviskosen, bevorzugt niedrigstviskosen, Celluloseethern mit minimaler Gelbfärbung.

Überraschenderweise wurde gefunden, dass durch Kombination von feuchter oxidativer Depolymerisierung und anschließender Neutralisierung in der Trockene das oben genannte Problem gelöst werden kann.

Gegenstand der vorliegenden Anmeldung ist daher ein Verfahren zur Herstellung eines niedrigviskosen Celluloseether-Produkts, umfassend die Schritte
(i) Bereitstellen mindestens eines wasserfeuchten Celluloseether-Edukts, wobei das Celluloseether-Edukt Hydroxypropylcellulose (HPC) ist,
(ii) Zugeben mindestens eines Oxidationsmittels zu dem Celluloseether-Edukt aus Schritt (i) unter Scherung,
(iii) Behandeln der in Schritt (ii) erhaltenen Mischung bei Temperaturen im Bereich von 20-100 °C, bevorzugt 70-100 °C,
(iv) Trocknen der in Schritt (iii) erhaltenen Mischung und
(v) Zugeben von mindestens einem alkalischen Salz zu der in Schritt (iv) erhaltenen Mischung, um das niedrigviskose Celluloseether-Produkt zu erhalten,
wobei das Celluloseether-Edukt eine höhere Lösungsviskosität als das Celluloseether-Produkt hat.

Bevorzugt hat Hydroxypropylcellulose einen molaren Substitutionsgrad MS(PO) von 3,5 bis 4,5, stärker bevorzugt von 3,8 bis 4,2, und/oder einen Gehalt von HPO von 70 bis 78 %, stärker bevorzugt von 73 bis 76 %.

Celluloseether-Edukte werden insbesondere in der pharmazeutischen Technologie eingesetzt. In diesem Bereich ist nicht nur die Viskosität für die Verarbeitung von entscheidender Bedeutung, sondern auch die optische Transparenz. Insbesondere für Hydroxypropylcellulose wurden bisher keine Depolymerisierungsverfahren beschrieben, die einerseits zu den erforderlichen niedrigen Viskositäten und andererseits zu hochbrillanten Lösungen bzw. verfärbungsfreien Feststoffen führen.

HPC ist eine hochpreisige Spezialtype und mit einer Weltjahresproduktion von nur ca. 5 kt ein Nischenprodukt. Hydroxypropylcellulose unterscheidet sich von Standardethertypen wie beispielsweise Methylhydroxyethylcelluloseether, Carboxymethylcelluloseether und Hydroxyethylcelluloseether in den chemischen und physikalischen Eigenschaften, insbesondere in der Thermoplastizität.

Celluloseether wird durch Veretherung von Cellulose hergestellt. Der erhaltene Celluloseether wird üblicherweise mit wässrigem Medium ausgewaschen und schließlich durch dem Fachmann bekannte Verfahren, zum Beispiel Filtration oder Zentrifugation, abgetrennt. Der dabei erhaltene Celluloseether ist wasser-feucht. Bevorzugt liegt der Trockengehalt des wasserfeuchten Cellulosetheredukts im Schritt (i) zwischen 20 und 90 Gew.-%, stärker bevorzugt zwischen 20 und 85 Gew.-%, noch stärker bevorzugt zwischen 35 und 75 Gew.-%, noch stärker bevorzugt zwischen 40 und 70 Gew.-%, bezogen auf die Gesamtmasse des wasserfeuchten Celluloseether-Edukts.

Gemäß dem erfindungsgemäßen Schritt (i) wird als wasserfeuchtes Celluloseether-Edukt bevorzugt der nach der Celluloseetherherstellung erhaltene wasserfeuchte Celluloseether ohne weitere Aufarbeitung, d.h. ohne Trocknung, direkt eingesetzt.

Bevorzugt hat eine 2 %-ige (Trockenzustand) wässrige Lösung des Celluloseether-Edukts eine Lösungsviskosität im Bereich von 100 bis 60.000 mPa s, stärker bevorzugt 100 bis 30.000 mPa s, noch stärker bevorzugt 150 bis 5.000 mPa s.

Die Viskosität wird hierzu mit einem Brookfield Digital Viscosimeter (LV-Spindel 2, 60 U/min) bei 20 °C gemessen.

Das in Schritt (ii) zugegebene Oxidationsmittel kann ausgewählt sein aus Peroxiden und Salzen davon, Persäuren und Salzen davon, Sauerstoff (O₂) und Ozon (O₃). Bevorzugt ist das Oxidationsmittel Wasserstoffperoxid (H₂O₂). Das Oxidationsmittel kann in Lösung, z.B. in wässriger Lösung, in fester Form oder als Gas zugegeben werden. Es wird bevorzugt in Mengen von 0,01-10 Gew.-% des reinen Oxidationsmittels (also ohne z.B. Lösungsmittel), stärker bevorzugt 1-6 Gew.-%, noch stärker bevorzugt 1-4 Gew.-%, bezogen auf die Trockenmasse des Celluloseether-Edukts eingesetzt.

Das Oxidationsmittel kann auf einmal oder kontinuierlich zugegeben werden. Ein Vorteil des erfindungsgemäßen Verfahrens ist, dass das Oxidationsmittel auf einmal zu dem Celluloseether-Edukt zugegeben werden kann. Damit entfallen aufwendige Dosierungsschritte. Bevorzugt wird daher das Oxidationsmittel auf einmal, d.h. in einem Schritt (einstufig), zugegeben.

Um eine optimale Homogenisierung des Celluloseether-Edukts mit dem Oxidationsmittel zu erzielen, erfolgt Schritt (ii) bevorzugt unter Rühren, Kneten oder Scheren.

Überraschenderweise hat sich gezeigt, dass bei Verwendung von Mischaggregaten, die einen hohen Scherenergieeintrag in die Mischung ermöglichen, vorteilhafte strukturelastische Eigenschaften erzielt werden können. So erfährt Mischgut, dass mit Intensivmischern (z.B. von der Firma Eirich, Hardheim oder der Firma Herbst, Buxtehude) verarbeitet wird, eine zeitabhängige thixotropieartige Scherverdünnung, die während des Scherenergieeintrags und auch einige Zeit (ca. 1-10 Minuten) nach dem Scherenergieeintrag auftritt. Dieses überraschende rheologische Verhalten ist besonders vorteilhaft für das sich anschließende Fördern bzw. Verpumpen des Mischguts aus dem Mischbehälter. Dieser Effekt ist besonders ausgeprägt bei Hydroxypropylcellulose (HPC) als Celluloseether-Edukt. In einer besonders bevorzugten Ausführungsform erfolgt daher der Schritt (ii) besonders bevorzugt unter Verwendung eines Intensivmischers.

Die in Schritt (ii) erhaltene Mischung wird anschließend bei erhöhten Temperaturen im Bereich von 20-100 °C, bevorzugt 70-100 °C, thermisch behandelt. Üblicherweise hat die Mischung bei Beginn des Schritts (iii) eine Temperatur von zwischen 15 und 30 °C, welche sich während des Behandlungsschritts (iii) entweder durch externes Heizen oder durch Schereintrag auf die erforderliche Temperatur erhöht. Alternativ kann das Celluloseether-Edukt bereits die in Schritt (iii) erforderliche Temperatur aufweisen bevor in Schritt (ii) ein Oxidationsmittel zugegeben wird. Somit kann Schritt (iii) entweder bei konstanter Temperatur oder mit einem Temperaturgradienten erfolgen. Bevorzugt wird in Schritt (iii) ein Temperaturgradient gefahren.

Der Behandlungsschritt (iii) erfolgt bevorzugt über einen Zeitraum von 30-600 Minuten, stärker bevorzugt 60-180 Minuten nach Erreichen der erforderlichen Temperatur.

Bevorzugt erfolgt Schritt (iii) unter Scherung, um eine möglichst homogene Mischung über die gesamte Dauer des Behandlungsschritts zu gewährleisten. Bevorzugt erfolgt der Scherenergieeintrag mit den gleichen Mitteln wie bereits in Schritt (ii). Besonders bevorzugt führt der Scherenergieeintrag in Schritt (iii) zur Aufrechterhaltung der erforderlichen Temperatur. Bevorzugt erfolgt Schritt (iii) unter Scherung mit einem Intensivmischer (siehe oben). In letzterem Fall kann das Mischgut aufgrund des oben beschriebenen rheologischen Verhaltens dem Behälter nach Beendigung des Behandlungsschritts (iii) vorteilhaft entnommen werden.

Die im Schritt (iii) erhaltene Mischung wird in einem weiteren Schritt getrocknet. Bevorzugt wird hierzu die in Schritt (iii) erhaltene Mischung bei Temperaturen zwischen 40 und 200 °C, stärker bevorzugt zwischen 60 und 160 °C, gegebenenfalls unter reduziertem Druck (< 1 bar, bevorzugt 0-800 mbar), getrocknet.

Schritt (iv) ist bevorzugt abgeschlossen, wenn der Wassergehalt der nach Schritt (iv) erhaltenen Mischung bei ≤ 10 Gew.-%, stärker bevorzugt ≤ 7 Gew.-%, noch stärker bevorzugt <5 Gew.-% und am stärksten bevorzugt ≤4 Gew.-%, bezogen auf die Gesamtmasse der Mischung liegt.

Dem Schritt (iv) kann sich ferner ein Zerkleinerungsschritt anschließen, bei dem die in Schritt (iv) erhaltene Mischung durch dem Fachmann bekannte Verfahren, z.B. Mahlen oder Mikronisieren, zerkleinert wird. Bevorzugt wird nach dem Zerkleinerungsschritt ein Pulver mit einer durchschnittlichen Partikelgrößenverteilung von d₅₀ = 250-350 erhalten.

Durch die Depolymerisierung entstehen saure Funktionsgruppen, die für einen sauren pH Wert einer wässrigen Lösung der erhaltenen Mischung verantwortlich sind. Gemäß Schritt (v) wird daher der in Schritt (iv) erhaltenen Mischung mindestens ein alkalisches Salz zugegeben. Dadurch werden die sauren Gruppen in der Mischung zumindest teilweise neutralisiert. Bevorzugt wird das alkalische Salz als Feststoff, stärker bevorzugt als trockener Feststoff, insbesondere als Pulver, zugegeben.

Bevorzugte alkalische Salze sind ausgewählt aus Natriumhydrogencarbonat, Dinatriumcarbonat, Natriumdihydrogenphosphat, Dinatriumhydrogenphosphat und Trinatriumphosphat. Das alkalische Salz wird in Schritt (v) bevorzugt in einer Menge von etwa 0,01 bis 3 Gew.-%, stärker bevorzugt etwa 0,1 bis 1,5 Gew.-%, noch stärker bevorzugt etwa 0,1 bis 0,6 Gew.-%, bezogen auf das Gesamtgewicht der in Schritt (iv) erhaltenen Mischung zugegeben. Die nach Schritt (v) erhaltene Mischung ist ein niedrigviskoses Celluloseether-Produkt.

In einer bevorzugten Ausführungsform wird die Menge an zugegebenem alkalischem Salz so eingestellt, dass der pH-Wert einer 2 %-igen wässrigen Lösung des niedrigviskosen Celluloseether-Produkts zwischen 5 und 8 liegt.

Somit hat das Celluloseether-Produkt als 2 %-ige wässrige Lösung bevorzugt einen pH-Wert von 5-8.

Das niedrigviskose Celluloseether-Produkt hat als 2 %-ige wässrige Lösung bevorzugt eine Lösungsviskosität von 1-30 mPa s, stärker bevorzugt 1-20 mPa s. Die Viskosität wird dabei mittels Brookfield Viskosimeter, LV Spindel 2, 60 U/min bei 20°C, gemessen.

Der Abbaugrad (*η*₀/*η*ₙₑᵤ) liegt bevorzugt bei 10-100, stärker bevorzugt bei 10-90.

In einer bevorzugten Ausführungsform wird in dem erfindungsgemäßen Verfahren keine externe Säure, insbesondere keine externe Mineralsäuren und/oder organische Säure, wie beispielsweise Salzsäure, Schwefelsäure, Salpetersäure, Phosphorsäure, Trifluoressigsäure, Essigsäure, Ameisensäure, Oxalsäure, Phthalsäure, Maleinsäure oder Benzoesäure zugesetzt. Wie bereits oben dargelegt, erhöht sich durch Zugabe von derartigen Säuren und anschließender Neutralisation mit Base der Salzgehalt des Produkts.

Ein weiterer Aspekt der vorliegenden Erfindung betrifft ein niedrigviskoses Celluloseether-Produkt erhältlich nach dem oben beschriebenen Verfahren.

Das niedrigviskose Celluloseether-Produkt hat als 2 %-ige wässrige Lösung bevorzugt eine Lösungsviskosität von 1-30 mPa s, gemessen mittels Brookfield Viskosimeter, LV Spindel 2, 60 U/min bei 20 °C. Der Fachmann unterscheidet hierbei zwischen niedrigviskosen Typen, die eine Viskosität von < 50 mPa s aufweisen und niedrigstviskosen Typen mit einer Viskosität von <20mPa s.

Das niedrigviskose Celluloseether-Produkt hat eine Lösungsviskosität, die 0,03-10 %, bevorzugt 0,1-8 %, der Lösungsviskosität des Celluloseether-Edukts beträgt, wobei die Lösungsviskositäten jeweils mit einem Brookfield Viskosimeter, LV Spindel 2, 60 U/min bei 20 °C, gemessen werden.

Bevorzugt hat das niedrigviskose Celluloseether-Produkt einen pH Wert von 5-8 als 2 %-ige wässrige Lösung.

Bevorzugt hat das Celluloseether-Produkt als 2%-ig wässrige Lösung einen Gelbverfärbungsindex von < 10, gemessen nach ASTM-E313 mit Lichtart C, Beobachtungswinkel 2°. Der Geldverfärbungs-Index des Celluloseether-Produkts als gemahlener Feststoff liegt bevorzugt bei < 20.

Die Sulfataschekonzentration des niedrigviskosen Celluloseether-Produkts ist bevorzugt < 1 %, bevorzugt < 0,5 %, gemäß Ph.Eur. [9004-64-2].

Der Chloridgehalt des niedrigviskosen Celluloseether-Produkts ist bevorzugt < 0,5 %, stärker bevorzugt < 0,3 %, gemessen gemäß Ph.Eur. [9004-64-2].

In einer bevorzugten Ausführungsform wird das erfindungsgemäße niedrigviskose Celluloseether-Produkt als Tablettierhilfsstoff, z.B. als Coatingmaterial, Bindemittel oder Kapselbildungsmaterial, für Anstriche oder als Gelbildner für Lebensmittelzusatzstoffe, organische Lösungsmittel oder keramische Massen verwendet.

In einer besonders bevorzugten Ausführungsform wird das erfindungsgemäße niedrigviskose Celluloseether-Produkt als Tablettierhilfsstoff verwendet.

Die vorliegende Erfindung soll anhand der folgenden Beispiele näher erläutert werden.

### Beispiel

5 kg warmes, knetgummiartiges Feuchtprodukt HPC (Temp.: ca. 50 °C; Wassergehalt: 45 %; aus Trockenprodukt ermittelt: HPO: 73,7 %, Viskosität 2 %-ig in Wasser: 353 mPa s (Brookfield LV, Spindel 2, 60 U/min, 20°C) werden in einem Intensivmischer der Firma Herbst, Buxtehude, in einem Schritt mit der gesamten Menge Wasserstoffperoxidlösung (150 ml, 47 %-ig) versehen. Die Mischung wird durch einen beheizbaren Intensivmischer auf 80°C erhitzt und für 90 min intensiv vermischt (Drehzahl Rührer: 40 U/min, Drehzahl Dissolver: 400 U/min). Dabei ist das System abgedeckt, aber nicht vollständig verschlossen, um bei Gasentwicklung keinen Druck aufzubauen, jedoch das Verdampfen von Wasser oder Oxidationsmittel weitgehend zu unterbinden.

Nach Ablauf der Abbauzeit werden die Rührorgane gestoppt, der Behälter geöffnet und das frei fließende Produkt abgelassen. Nach Trocknung und Vermahlung wird ein farbloses Pulver erhalten, das als 2 %-ige wässrige Lösung einen pH von 3,5 entwickelt. Zu dem getrockneten, vermahlenen Abbauprodukt werden 0,3 Gew.-% festes Natriumhydrogencarbonat zugegeben und gut vermischt (HPC P10). Die dann daraus hergestellte 2 %-ige wässrige Lösung zeigt bei Rotationsviskosimeter LV (Spindel 2, 60 U/min, 20°C) eine Viskosität von 10 mPa s und stellt eine hochklare Flüssigkeit mit einem Yellow Index von 3,3 (ASTM E313) dar.

Wird die Abbauzeit von ca. 90 Minuten auf 100 (HPC P10F; 0,35% NaHCO₃) bzw. 120 Minuten (HPC P6) verlängert, so lassen sich im ansonsten unveränderten Prozess wie oben beschrieben ähnlich klarlösliche Produkte herstellen.

Die Daten sind in der untenstehenden Tabelle zusammengefasst.

| Produkt | Viskosität [mPa s] | HPO [%] | Weißgrad* Pulver | YI Pulver | YI Lösung | pH [2 %-ig] |
|---|---|---|---|---|---|---|
| HPC P10 | 10,3 | 73,9 | 82,0 | 5,34 | 3,3 | 5,9 |
| HPC P10F | 9,4 | 71,8 | 92,0 | 3,08 | 4,3 | 7,0 |
| HPC P6 | 8,6 | 72,1 | 80,0 | 7,74 | 4,0 | 5,7 |

| | | | | | | |
|---|---|---|---|---|---|---|
| * gemessen nach DIN 5033 | | | | | | |

## Patentansprüche

1. Verfahren zur Herstellung eines niedrigviskosen Celluloseether-Produkts, umfassend die Schritte
(i) Bereitstellen mindestens eines wasserfeuchten Celluloseether-Edukts, wobei das Celluloseether-Edukt Hydroxypropylcellulose (HPC) ist,
(ii) Zugeben mindestens eines Oxidationsmittels zu dem Celluloseether-Edukt aus Schritt (i) unter Scherung,
(iii) Behandeln der in Schritt (ii) erhaltenen Mischung bei Temperaturen im Bereich von 20-100 °C, bevorzugt 70-100 °C,
(iv) Trocknen der in Schritt (iii) erhaltenen Mischung und
(v) Zugeben von mindestens einem alkalischen Salz zu der in Schritt (iv) erhaltenen Mischung, um das niedrigviskose Celluloseether-Produkt zu erhalten, wobei das Celluloseether-Edukt eine höhere Lösungsviskosität als das Celluloseether-Produkt hat.

2. Verfahren nach einem der vorhergehenden Ansprüche, wobei der Trockengehalt des wasserfeuchten Celluloseether-Edukts aus Schritt (i) 20-90 Gew.-%, bevorzugt 35-75 Gew.-%, noch stärker bevorzugt 40-70 Gew.-% bezogen auf dessen Gesamtmasse ist.

3. Verfahren nach einem der vorhergehenden Ansprüche, wobei das Oxidationsmittel ausgewählt ist aus Peroxiden und Salzen davon, Persäuren und Salzen davon, O₂ und O₃, bevorzugt H₂O₂ und bevorzugt auf einmal oder kontinuierlich zugegeben wird.

4. Verfahren nach einem der vorhergehenden Ansprüche, wobei das Oxidationsmittel in Lösung, z.B. in wässriger Lösung, in fester Form oder als Gas zugegeben wird.

5. Verfahren nach einem der vorhergehenden Ansprüche, wobei das Oxidationsmittel in Mengen von 0,01 bis 10 Gew.-%, bevorzugt 1-6 Gew.-%, bezogen auf die Trockenmasse des Celluloseether-Edukts zugegeben wird.

6. Verfahren nach einem der vorhergehenden Ansprüche, wobei der Schritt (iii) bei konstanter Temperatur oder mit einem Temperaturgradienten, bevorzugt über einen Zeitraum von 30-600 Minuten erfolgt.

7. Verfahren nach einem der vorhergehenden Ansprüche, wobei der Schritt (iv) bei Temperaturen zwischen 40 und 200 °C, bevorzugt 60 und 160 °C, gegebenenfalls unter reduziertem Druck (< 1 bar) erfolgt und wobei der Wassergehalt der nach Schritt (iv) erhaltenen Mischung bevorzugt bei ≤ 10 Gew.-%, bezogen auf die Gesamtmasse der Mischung, liegt.

8. Verfahren nach einem der vorhergehenden Ansprüche, wobei das alkalische Salz in Schritt (v) als Feststoff zugegeben wird.

9. Verfahren nach einem der vorhergehenden Ansprüche, wobei das alkalische Salz ausgewählt ist aus der Gruppe bestehend aus Natriumhydrogencarbonat, Dinatriumcarbonat, Natriumdihydrogenphosphat, Dinatriumhydrogenphosphat und Trinatriumphosphat und wobei das alkalische Salz in Schritt (v) bevorzugt in einer Menge von etwa 0,01-3 Gew.-% bezogen auf das Gesamtgewicht des in Schritt (iv) erhaltenen Gemisches zugegeben wird.

10. Niedrigviskoses Celluloseether-Produkt erhältlich nach einem Verfahren gemäß einem der Ansprüche 1-9.

11. Niedrigviskoses Celluloseether-Produkt nach Anspruch 10, das als 2%-ige wässrige Lösung eine Lösungsviskosität von 1-30 mPas, bevorzugt 1-20 mPas aufweist.

12. Niedrigviskoses Celluloseether-Produkt nach Anspruch 10 oder 11, das als 2 %-ige wässrige Lösung einen pH Wert von 5-8 aufweist.

13. Niedrigviskoses Celluloseether-Produkt nach einem der Ansprüche 10-12, dessen Lösungsviskosität 0,03-10 % der Lösungsviskosität des Celluloseether-Edukts beträgt.

14. Verwendung des niedrigviskosen Celluloseether-Produkts nach einem der Ansprüche 10-13 als Tablettierhilfsstoff, zum Beispiel Coatingmaterial, Bindemittel oder Kapselbildungsmaterial, für Anstriche oder als Gelbildner für Lebensmittelzusatzstoffe, organische Lösungsmittel oder keramische Massen.

## Claims

1. A method for producing a low-viscosity cellulose ether product, comprising the steps:
(i) providing at least one water-moist cellulose ether starting material, wherein the cellulose ether starting material is hydroxypropyl cellulose (HPC),
(ii) adding at least one oxidising agent to the cellulose ether starting material from step (i) under shear,
(iii) treating the mixture obtained in step (ii) at temperatures in the range of 20-100 °C, preferably 70-100 °C,
(iv) drying the mixture obtained in step (iii), and
(v) adding at least one alkaline salt to the mixture obtained in step (iv) to obtain the low-viscosity cellulose ether product, the cellulose ether starting material having a higher solution viscosity than the cellulose ether product.

2. The method according to any of the preceding claims, wherein the dry content of the water-moist cellulose ether starting material from step (i) is 20-90 wt.%, preferably 35-75 wt.%, even more preferably 40-70 wt.%, based on the total mass thereof.

3. The method according to any of the preceding claims, wherein the oxidising agent is selected from peroxides and salts thereof, peracids and salts thereof, O₂ and O₃, preferably H₂O₂ and is preferably added all at once or continuously.

4. The method according to any of the preceding claims, wherein the oxidising agent is added in solution, for example in aqueous solution, in solid form or as a gas.

5. The method according to any of the preceding claims, wherein the oxidising agent is added in amounts of 0.01 to 10 wt.%, preferably 1-6 wt.%, based on the dry mass of the cellulose ether starting material.

6. The method according to any of the preceding claims, wherein step (iii) takes place at a constant temperature or with a temperature gradient, preferably over a period of 30-600 minutes.

7. The method according to any of the preceding claims, wherein step (iv) takes place at temperatures between 40 and 200 °C, preferably 60 and 160 °C, optionally under reduced pressure (<1 bar), and wherein the water content of the mixture obtained after step (iv) is preferably ≤ 10 wt.%, based on the total mass of the mixture.

8. The method according to any of the preceding claims, wherein the alkaline salt in step (v) is added as a solid.

9. The method according to any of the preceding claims, wherein the alkaline salt is selected from the group consisting of sodium hydrogen carbonate, disodium carbonate, sodium dihydrogen phosphate, disodium hydrogen phosphate, and trisodium phosphate, and wherein the alkaline salt in step (v) is preferably added in an amount of about 0.01-3 wt.% based on the total weight of the mixture obtained in step (iv).

10. A low-viscosity cellulose ether product obtainable by a method according to any of claims 1-9.

11. The low-viscosity cellulose ether product according to claim 10, which as a 2% aqueous solution has a solution viscosity of 1-30 mPas, preferably 1-20 mPas.

12. The low-viscosity cellulose ether product according to claim 10 or 11, which as a 2% aqueous solution has a pH of 5-8.

13. The low-viscosity cellulose ether product according to any of claims 10-12, the solution viscosity of which is 0.03-10% of the solution viscosity of the cellulose ether starting material.

14. Use of the low-viscosity cellulose ether product according to any of claims 10-13 as a tabletting aid, for example coating material, binder, or capsule-forming material, for paints, or as a gelling agent for food additives, organic solvents, or ceramic masses.

## Revendications

1. Procédé de préparation d'un produit d'éther de cellulose à faible viscosité, comprenant les étapes consistant à
(i) fournir au moins un éduit d'éther de cellulose hydraté, dans lequel l'éduit d'éther de cellulose est l'hydroxypropylcellulose (HPC),
(ii) ajouter au moins un agent oxydant à l'éduit d'éther de cellulose de l'étape (i) sous cisaillement,
(iii) traiter le mélange obtenu à l'étape (ii) à des températures comprises entre 20 et 100°C, de préférence entre 70 et 100°C,
(iv) sécher le mélange obtenu à l'étape (iii), et
(v) ajouter au moins un sel alcalin au mélange obtenu à l'étape (iv) pour obtenir le produit d'éther de cellulose à faible viscosité, dans lequel l'éduit d'éther de cellulose a viscosité en solution supérieure à celle du produit d'éther de cellulose.

2. Procédé selon l'une quelconque des revendications précédentes, dans lequel la teneur en matière sèche de l'éduit d'éther de cellulose hydraté de l'étape (i) est de 20 à 90 % en poids, de préférence de 35 à 75 % en poids, de manière encore plus préférée de 40 à 70 % en poids par rapport à sa masse totale.

3. Procédé selon l'une quelconque des revendications précédentes, dans lequel l'agent oxydant est choisi parmi les peroxydes et leurs sels, les peracides et leurs sels, O₂ et O₃, de préférence H₂O₂, et est de préférence ajouté en une seule fois ou en continu.

4. Procédé selon l'une quelconque des revendications précédentes, dans lequel l'agent oxydant est ajouté en solution, par exemple en solution aqueuse, sous forme solide ou sous forme de gaz.

5. Procédé selon l'une quelconque des revendications précédentes, dans lequel l'agent oxydant est ajouté en des quantités allant de 0,01 à 10 % en poids, de préférence de 1 à 6 % en poids, par rapport à la masse sèche de l'éduit d'éther de cellulose.

6. Procédé selon l'une quelconque des revendications précédentes, dans lequel l'étape (iii) est réalisée à température constante ou avec un gradient de température, de préférence sur une durée de 30 à 600 minutes.

7. Procédé selon l'une quelconque des revendications précédentes, dans lequel l'étape (iv) est réalisée à des températures comprises entre 40 et 200°C, de préférence entre 60 et 160°C, éventuellement sous pression réduite (< 1 bar), et dans lequel la teneur en eau du mélange obtenu après l'étape (iv) est de préférence < 10% en poids par rapport à la masse totale du mélange.

8. Procédé selon l'une quelconque des revendications précédentes, dans lequel le sel alcalin est ajouté à l'étape (v) sous forme solide.

9. Procédé selon l'une quelconque des revendications précédentes, dans lequel le sel alcalin est choisi dans le groupe constitué par l'hydrogénocarbonate de sodium, le carbonate disodique, le dihydrogénophosphate de sodium, l'hydrogénophosphate disodique et le phosphate trisodique, et dans lequel le sel alcalin est ajouté à l'étape (v) de préférence en une quantité d'environ 0,01 à 3 % en poids par rapport à la masse totale du mélange obtenu à l'étape (iv).

10. Produit d'éther de cellulose à faible viscosité pouvant être obtenu par un procédé selon l'une quelconque des revendications 1 à 9.

11. Produit d'éther de cellulose à faible viscosité selon la revendication 10, qui présente, sous forme de solution aqueuse à 2%, une viscosité en solution de 1 à 30 mPas, de préférence de 1 à 20 mPas.

12. Produit d'éther de cellulose à faible viscosité selon la revendication 10 ou 11, qui présente un pH de 5 à 8 sous forme de solution aqueuse à 2 %.

13. Produit d'éther de cellulose à faible viscosité selon l'une quelconque des revendications 10 à 12, dont la viscosité en solution est de 0,03 à 10 % de la viscosité en solution de l'éduit d'éther de cellulose.

14. Utilisation du produit d'éther de cellulose à faible viscosité selon l'une quelconque des revendications 10 à 13 comme adjuvant de fabrication de comprimés, par exemple matériau d'enrobage, liant ou matériau de formation de capsules, pour des peintures ou comme gélifiant pour des additifs alimentaires, des solvants organiques ou des masses céramiques.
